# EUROPEAN PATENT SPECIFICATION

(11) **EP 3 571 267 B1**
(45) Date of publication and mention of the grant of the patent: **29.03.2023**
(21) Application number: 18709164.0
(22) Date of filing: 17.01.2018
(51) Int. Cl.: C10M 141/12

(54) **LUBRICATING OIL COMPOSITIONS AND METHOD FOR PREVENTING OR REDUCING LOW SPEED PRE-IGNITION IN DIRECT INJECTED SPARK-IGNITED ENGINES**
SCHMIERSTOFFZUSAMMENSETZUNG UND METHODE ZUR VERHINDERUNG ODER REDUZIERUNG VON FRÜHZÜNDUNG IN MOTOREN MIT DIREKTEINSPRITZUNG
COMPOSITIONS LUBRIFIANTES ET MÉTHODE POUR PREVENIR OU DIMINUER LE PRE-ALLUMAGE DANS UN MOTEUR AVEC INJECTION DIRECTE

(30) Priority: 20.01.2017 US 201762448621 P
(43) Date of publication of application: 27.11.2019
(60) Divisional application: 22154359.8
(73) Proprietor: Chevron Oronite Company LLC, San Ramon, CA 94583 (US)
(72) Inventor: ELLIOTT, Ian G., San Ramon California 94583 (US); VAN DAM, Willem, San Ramon California 94583 (US)
(74) Representative: Haseltine Lake Kempner LLP
(86) International application number: PCT/US2018/013976
(87) International publication number: WO 2018/136470

(56) References cited:
- WO-A1-2015/042340
- WO-A1-2016/043333
- WO-A1-2016/148708
- US-A1- 2007 129 263
- US-A1- 2010 210 493
- KAZUO TAKEUCHI ET AL: "Investigation of Engine Oil Effect on Abnormal Combustion in Turbocharged Direct Injection - Spark Ignition Engines", SAE INTERNATIONAL JOURNAL OF FUELS AND LUBRICANTS, vol. 5, no. 3, 30 January 2012 (2012-01-30), pages 1017-1024, XP055203823, ISSN: 1946-3960, DOI: 10.4271/2012-01-1615

## Description

### FIELD OF THE INVENTION

This disclosure relates to a lubricant composition for a direct injected, boosted, spark ignited internal combustion engine that contains at least one lithium-containing compound. This disclosure also relates to a method for preventing or reducing low speed pre-ignition in an engine lubricated with a formulated oil. The formulated oil has a composition comprising at least one oil soluble or oil dispersible lithium compound.

### BACKGROUND OF THE INVENTION

One of the leading theories surrounding the cause of low speed pre-ignition (LSPI) is at least in part, due to auto-ignition of engine oil droplets that enter the engine combustion chamber from the piston crevice under high pressure, during periods in which the engine is operating at low speeds, and compression stroke time is longest (Amann et al. SAE 2012-01-1140). Although engine knocking and pre-ignition problems can be and are being resolved by optimization of internal engine components and by the use of new component technology such as electronic controls and knock sensors, modification of the lubricating oil compositions used to lubricate such engines would be desirable.

### DESCRIPTION OF RELATED ART

U.S. Patent Application Nos. US20140165942, US20150322367, US20150322368, US20150322369, US20150322372, US20150307802, 20160348028, foreign application JP2014152301, and international applications WO2015042337, WO2015042340, WO2015042341, WO2015023559, WO2015114920 disclose methods and/or formulations to address low speed pre-ignition as it relates to the lubricant. Non-patent publications that discuss the problem of LSPI and potential lubricant solutions include; Dahnz et al. SAE 2010-01-0355, Zadeh et al. SAE 2011-01-0340, Takeuchi et al. SAE 2012-01-1615, Amann et al. SAE 2012-01-1140, Hirano et al. SAE 2013-01-2569, Okada et al. SAE 2014-01-1218, Miyasaka et al. SAE 2014-32-0092, Miura et al. SAE 2015-32-0771, Moriyoshi et al. SAE 2015-01-0755 and SAE 2015-01-0756, Morikawa et al. SAE 2015-01-1870, Moriyoshi et al. SAE 2015-01-1865, Onodera et al. SAE 2015-01-2027, Welling et al. SAE 2014-01-1213, Amann et al. SAE 2011-01-0342, and Zaccadi et al. SAE 2014-01-2688.

The present inventors have discovered a solution for addressing the problem of LSPI through the use of lithium containing additives.

### SUMMARY OF THE INVENTION

Provided herein is a method for preventing or reducing low speed pre-ignition in a direct injected, boosted, spark ignited internal combustion engine, said method comprising the step of lubricating the crankcase of the engine with a lubricating oil composition comprising from about 100 to about 900 ppm of metal from at least one lithium-containing compound, based on the total weight of the lubricating oil.

### DETAILED DESCRIPTION OF THE INVENTION

### Definitions

The term "boosting" is used throughout the specification. Boosting refers to running an engine at higher intake pressures than in naturally aspirated engines. A boosted condition can be reached by use of a turbocharger (driven by exhaust) or a supercharger (driven by the engine). Using smaller engines that provide higher power densities has allowed engine manufacturers to provide excellent performance while reducing frictional and pumping losses. This is accomplished by increasing boost pressures with the use of turbochargers or mechanical superchargers, and by down-speeding the engine by using higher transmission gear ratios allowed by higher torque generation at lower engine speeds. However, higher torque at lower engine speeds has been found to cause random pre-ignition in engines at low speeds, a phenomenon known as Low Speed Pre-Ignition, or LSPI, resulting in extremely high cylinder peak pressures, which can lead to catastrophic engine failure. The possibility of LSPI prevents engine manufacturers from fully optimizing engine torque at lower engine speed in such smaller, high-output engines.

As used herein, the following terms have the following meanings unless expressly stated to the contrary: The term "alkali or alkaline metal" refers to lithium or potassium.

The term "oil-soluble" refers to a material that is soluble in mineral oil to the extent of at least about one gram per liter at 25° C.

The term "sulfated ash" as used herein refers to the non-combustible residue resulting from detergents and metallic additives in lubricating oil. Sulfated ash may be determined using ASTM Test D874.

The term "Total Base Number" or "TBN" as used herein refers to the amount of base equivalent to milligrams of KOH in one gram of sample. Thus, higher TBN numbers reflect more alkaline products, and therefore a greater alkalinity. TBN was determined using ASTM D 2896 test. Unless otherwise specified, all percentages are in weight percent.

In general, the level of sulfur in the lubricating oil compositions of the present invention is less than or equal to about 0.7 wt. %, based on the total weight of the lubricating oil composition, e.g., a level of sulfur of about 0.01 wt. % to about 0.70 wt. %, 0.01 to 0.6 wt.%, 0.01 to 0.5 wt.%, 0.01 to 0.4 wt.%, 0.01 to 0.3 wt.%, 0.01 to 0.2 wt.%, 0.01 wt. % to 0.10 wt. %. In one embodiment, the level of sulfur in the lubricating oil compositions of the present invention is less than or equal to about 0.60 wt. %, less than or equal to about 0.50 wt. %, less than or equal to about 0.40 wt. %, less than or equal to about 0.30 wt. %, less than or equal to about 0.20 wt. %, less than or equal to about 0.10 wt. % based on the total weight of the lubricating oil composition.

In one embodiment, the levels of phosphorus in the lubricating oil compositions of the present invention is less than or equal to about 0.09 wt. %, based on the total weight of the lubricating oil composition, e.g., a level of phosphorus of about 0.01 wt. % to about 0.09 wt. %. In one embodiment, the levels of phosphorus in the lubricating oil compositions of the present invention is less than or equal to about 0.08 wt. %, based on the total weight of the lubricating oil composition, e.g., a level of phosphorus of about 0.01 wt. % to about 0.08 wt. %. In one embodiment, the levels of phosphorus in the lubricating oil compositions of the present invention is less than or equal to about 0.07 wt. %, based on the total weight of the lubricating oil composition, e.g., a level of phosphorus of about 0.01 wt. % to about 0.07 wt. %. In one embodiment, the levels of phosphorus in the lubricating oil compositions of the present invention is less than or equal to about 0.05 wt. %, based on the total weight of the lubricating oil composition, e.g., a level of phosphorus of about 0.01 wt. % to about 0.05 wt. %.

In one embodiment, the level of sulfated ash produced by the lubricating oil compositions of the present invention is less than or equal to about 1.60 wt. % as determined by ASTM D 874, e.g., a level of sulfated ash of from about 0.10 to about 1.60 wt. % as determined by ASTM D 874. In one embodiment, the level of sulfated ash produced by the lubricating oil compositions of the present invention is less than or equal to about 1.00 wt. % as determined by ASTM D 874, e.g., a level of sulfated ash of from about 0.10 to about 1.00 wt. % as determined by ASTM D 874. In one embodiment, the level of sulfated ash produced by the lubricating oil compositions of the present invention is less than or equal to about 0.80 wt. % as determined by ASTM D 874, e.g., a level of sulfated ash of from about 0.10 to about 0.80 wt. % as determined by ASTM D 874. In one embodiment, the level of sulfated ash produced by the lubricating oil compositions of the present invention is less than or equal to about 0.60 wt. % as determined by ASTM D 874, e.g., a level of sulfated ash of from about 0.10 to about 0.60 wt. % as determined by ASTM D 874.

Low Speed Pre-Ignition is most likely to occur in direct-injected, boosted (turbocharged or supercharged), spark-ignited (gasoline) internal combustion engines that, in operation, generate a break mean effective pressure level of greater than about 15 bar (peak torque), such as at least about 18 bar, particularly at least about 20 bar at engine speeds of from about 1500 to about 2500 rotations per minute (rpm), such as at engine speeds of from about 1500 to about 2000 rpm. As used herein, break mean effective pressure (BMEP) is defined as the work accomplished during one engine cycle, divided by the engine swept volume; the engine torque normalized by engine displacement. The word "brake" denotes the actual torque/power available at the engine flywheel, as measured on a dynamometer. Thus, BMEP is a measure of the useful power output of the engine.

In one embodiment of the invention, the engine is operated at speeds between 500 rpm and 3000 rpm, or 800 rpm to 2800 rpm, or even 1000 rpm to 2600 rpm. Additionally, the engine may be operated with a break mean effective pressure of 10 bars to 30 bars, or 12 bars to 24 bars.

LSPI events, while comparatively uncommon, may be catastrophic in nature. Hence drastic reduction or even elimination of LSPI events during normal or sustained operation of a direct fuel injection engine is desirable. In one embodiment, the method of the invention is such that there are less than 15 LSPI events per 100,000 combustion events or less than 10 LSPI events per 100,000 combustion events. In one embodiment, there may be less than 5 LSPI events per 100,000 combustion events, less than 4 LSPI events per 100,000 combustion events, less than 3 LSPI events per 100,000 combustion events, less than 2 LSPI events per 100,000 combustion events, less than 1 LSPI event per 100,000 combustion events, or there may be 0 LSPI events per 100,000 combustion events.

Therefore, in an aspect the present disclosure provides a method for preventing or reducing low speed pre-ignition in a direct injected, boosted, spark ignited internal combustion engine, said method comprising the step of lubricating the crankcase of the engine with a lubricating oil composition comprising at least one lithium-containing compound. In one embodiment, the amount of metal from the at least one lithium-containing compound is from about 100 to about 900 ppm, from about 100 to about 800 ppm, or from about 100 to about 700 ppm, or from about 100 ppm to about 600 ppm, or from about 100 to about 500 ppm, or from about 100 to about 400 ppm. In one embodiment, all of the metal in the lubricating oil composition is derived from the lithium compound.

In one embodiment, the method of the invention provides a reduction in the number of LSPI events of at least 10 percent, or at least 20 percent, or at least 30 percent, or at least 50 percent, or at least 60 percent, or at least 70 percent, or at least 80 percent, or at least 90 percent, or at least 95 percent.

It has now been found that the occurrence of LSPI in engines susceptible to the occurrence of LSPI can be reduced by lubricating such engines with lubricating oil compositions containing a lithium compound.

In another aspect, the present disclosure provides a method for reducing the severity of low speed pre-ignition events in a direct injected, boosted, spark ignited internal combustion engine, said method comprising the step of lubricating the crankcase of the engine with a lubricating oil composition comprising at least one lithium-containing compound. LSPI events are determined by monitoring peak cylinder pressure (PP) and mass fraction burn (MFB) of the fuel charge in the cylinder. When either or both criteria are met, it can be said that an LSPI event has occurred. The threshold for peak cylinder pressure varies by test, but is typically 4-5 standard deviations above the average cylinder pressure. Likewise, the MFB threshold is typically 4-5 standard deviations earlier than the average MFB (represented in crank angle degrees). LSPI events can be reported as average events per test, events per 100,000 combustion cycles, events per cycle, and/or combustion cycles per event. In one embodiment, the number of LSPI events, where both MFB02 and Peak Pressure (PP) Requirements that were greater than 90 bar of pressure, is less than 5 events, less than 4 events, less than 3 events, less than 2 events, or less than 1 event. In one embodiment, the number of LSPI events that were greater than 90 bar was zero events, or in other words completely suppressed LSPI events greater than 90 bar. In one embodiment, the number of LSPI events where both MFB02 and Peak Pressure (PP) Requirements that were greater than 100 bar of pressure is less than 5 events, less than 4 events, less than 3 events, less than 2 events, or less than 1 event. In one embodiment, the number of LSPI events that were greater than 100 bar was zero events, or in other words completely suppressed LSPI events greater than 100 bar. In one embodiment, the number of LSPI events where both MFB02 and Peak Pressure (PP) Requirements that were greater than 110 bar of pressure is less than 5 events, less than 4 events, less than 3 events, less than 2 events, or less than 1 event. In one embodiment, the number of LSPI events that were greater than 110 bar was zero events, or in other words completely suppressed LSPI events greater than 110 bar. For example, the number of LSPI events where both MFB02 and Peak Pressure (PP) Requirements that were greater than 120 bar of pressure is less than 5 events, less than 4 events, less than 3 events, less than 2 events, or less than 1 event. In one embodiment, the number of LSPI events that were greater than 120 bar was zero events, or in other words completely suppressed very severe LSPI events (i.e., events greater than 120 bar).

It has now been found that the occurrence of LSPI in engines susceptible to the occurrence of LSPI can be reduced by lubricating such engines with lubricating oil compositions containing a lithium-containing compound.

The disclosure further provides the method described herein in which the engine is fueled with a liquid hydrocarbon fuel, a liquid nonhydrocarbon fuel, or mixtures thereof.

The disclosure further provides the method described herein in which the engine is fueled by natural gas, liquefied petroleum gas (LPG), compressed natural gas (CNG), or mixtures thereof.

Lubricating oil compositions suitable for use as passenger car motor oils conventionally comprise a major amount of oil of lubricating viscosity and minor amounts of performance enhancing additives, including ash-containing compounds. Conveniently, lithium is introduced into the lubricating oil compositions used in the practice of the present disclosure by one or more lithium containing compounds. One class of compounds capable of this are detergents. Suitable detergent architectures are described herein.

### Oil of Lubricating viscosity/Base Oil Component

The oil of lubricating viscosity for use in the lubricating oil compositions of this disclosure, also referred to as a base oil, is typically present in a major amount, e.g., an amount of greater than 50 wt. %, preferably greater than about 70 wt. %, more preferably from about 80 to about 99.5 wt. % and most preferably from about 85 to about 98 wt. %, based on the total weight of the composition. The expression "base oil" as used herein shall be understood to mean a base stock or blend of base stocks which is a lubricant component that is produced by a single manufacturer to the same specifications (independent of feed source or manufacturer's location); that meets the same manufacturer's specification; and that is identified by a unique formula, product identification number, or both. The base oil for use herein can be any presently known or later-discovered oil of lubricating viscosity used in formulating lubricating oil compositions for any and all such applications, e.g., engine oils, marine cylinder oils, functional fluids such as hydraulic oils, gear oils, transmission fluids, etc. Additionally, the base oils for use herein can optionally contain viscosity index improvers, e.g., polymeric alkylmethacrylates; olefinic copolymers, e.g., an ethylene-propylene copolymer or a styrenebutadiene copolymer; and the like and mixtures thereof.

As one skilled in the art would readily appreciate, the viscosity of the base oil is dependent upon the application. Accordingly, the viscosity of a base oil for use herein will ordinarily range from about 2 to about 2000 centistokes (cSt) at 100° Centigrade (C.). Generally, individually the base oils used as engine oils will have a kinematic viscosity range at 100° C. of about 2 cSt to about 30 cSt, preferably about 3 cSt to about 16 cSt, and most preferably about 4 cSt to about 12 cSt and will be selected or blended depending on the desired end use and the additives in the finished oil to give the desired grade of engine oil, e.g., a lubricating oil composition having an SAE Viscosity Grade of 0W, 0W-8, 0W-12, 0W-16, 0W-20, 0W-26, 0W-30, 0W-40, 0W-50, 0W-60, 5W, 5W-20, 5W-30, 5W-40, 5W-50, 5W-60, 10W, 10W-20, 10W-30, 10W-40, 10W-50, 15W, 15W-20, 15W-30, 15W-40, 30, 40 and the like.

Group I base oils generally refer to a petroleum derived lubricating base oil having a saturates content of less than 90 wt. % (as determined by ASTM D 2007) and/or a total sulfur content of greater than 300 ppm (as determined by ASTM D 2622, ASTM D 4294, ASTM D 4297 or ASTM D 3120) and has a viscosity index (VI) of greater than or equal to 80 and less than 120 (as determined by ASTM D 2270).

Group II base oils generally refer to a petroleum derived lubricating base oil having a total sulfur content equal to or less than 300 parts per million (ppm) (as determined by ASTM D 2622, ASTM D 4294, ASTM D 4927 or ASTM D 3120), a saturates content equal to or greater than 90 weight percent (as determined by ASTM D 2007), and a viscosity index (VI) of between 80 and 120 (as determined by ASTM D 2270).

Group III base oils generally refer to a petroleum derived lubricating base oil having less than 300 ppm sulfur, a saturates content greater than 90 weight percent, and a VI of 120 or greater. Group IV base oils are polyalphaolefins (PAOs).

Group V base oils include all other base oils not included in Group I, II, III, or IV.

The lubricating oil composition can contain minor amounts of other base oil components. For example, the lubricating oil composition can contain a minor amount of a base oil derived from natural lubricating oils, synthetic lubricating oils or mixtures thereof. Suitable base oil includes base stocks obtained by isomerization of synthetic wax and slack wax, as well as hydrocracked base stocks produced by hydrocracking (rather than solvent extracting) the aromatic and polar components of the crude.

Suitable natural oils include mineral lubricating oils such as, for example, liquid petroleum oils, solvent-treated or acid-treated mineral lubricating oils of the paraffinic, naphthenic or mixed paraffinic-naphthenic types, oils derived from coal or shale, animal oils, vegetable oils (e.g., rapeseed oils, castor oils and lard oil), and the like.

Suitable synthetic lubricating oils include, but are not limited to, hydrocarbon oils and halo-substituted hydrocarbon oils such as polymerized and interpolymerized olefins, e.g., polybutylenes, polypropylenes, propylene-isobutylene copolymers, chlorinated polybutylenes, poly(1-hexenes), poly(1-octenes), poly(1-decenes), and the like and mixtures thereof; alkylbenzenes such as dodecylbenzenes, tetradecylbenzenes, dinonylbenzenes, di(2-ethylhexyl)-benzenes, and the like; polyphenyls such as biphenyls, terphenyls, alkylated polyphenyls, and the like; alkylated diphenyl ethers and alkylated diphenyl sulfides and the derivative, analogs and homologs thereof and the like.

Other synthetic lubricating oils include, but are not limited to, oils made by polymerizing olefins of less than 5 carbon atoms such as ethylene, propylene, butylenes, isobutene, pentene, and mixtures thereof. Methods of preparing such polymer oils are well known to those skilled in the art.

Additional synthetic hydrocarbon oils include liquid polymers of alpha olefins having the proper viscosity. Especially useful synthetic hydrocarbon oils are the hydrogenated liquid oligomers of C₆ to C₁₂ alpha olefins such as, for example, 1-decene trimer.

Another class of synthetic lubricating oils include, but are not limited to, alkylene oxide polymers, i.e., homopolymers, interpolymers, and derivatives thereof where the terminal hydroxyl groups have been modified by, for example, esterification or etherification. These oils are exemplified by the oils prepared through polymerization of ethylene oxide or propylene oxide, the alkyl and phenyl ethers of these polyoxyalkylene polymers (e.g., methyl poly propylene glycol ether having an average molecular weight of 1,000, diphenyl ether of polyethylene glycol having a molecular weight of 500-1000, diethyl ether of polypropylene glycol having a molecular weight of 1,000-1,500, etc.) or mono- and polycarboxylic esters thereof such as, for example, the acetic esters, mixed C₃-C₈ fatty acid esters, or the C₁₃ oxo acid diester of tetraethylene glycol.

Yet another class of synthetic lubricating oils include, but are not limited to, the esters of dicarboxylic acids e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acids, alkyl malonic acids, alkenyl malonic acids, etc., with a variety of alcohols, e.g., butyl alcohol, hexyl alcohol, dodecyl alcohol, 2-ethylhexyl alcohol, ethylene glycol, diethylene glycol monoether, propylene glycol, etc. Specific examples of these esters include dibutyl adipate, di(2-ethylhexyl)sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, the complex ester formed by reacting one mole of sebacic acid with two moles of tetraethylene glycol and two moles of 2-ethylhexanoic acid and the like.

Esters useful as synthetic oils also include, but are not limited to, those made from carboxylic acids having from about 5 to about 12 carbon atoms with alcohols, e.g., methanol, ethanol, etc., polyols and polyol ethers such as neopentyl glycol, trimethylol propane, pentaerythritol, dipentaerythritol, tripentaerythritol, and the like.

Silicon-based oils such as, for example, polyalkyl-, polyaryl-, polyalkoxy- or polyaryloxy-siloxane oils and silicate oils, comprise another useful class of synthetic lubricating oils. Specific examples of these include, but are not limited to, tetraethyl silicate, tetra-isopropyl silicate, tetra-(2-ethylhexyl) silicate, tetra-(4-methyl-hexyl)silicate, tetra-(p-tert-butylphenyl)silicate, hexyl-(4-methyl-2-pentoxy)disiloxane, poly(methyl)siloxanes, poly(methylphenyl)siloxanes, and the like. Still yet other useful synthetic lubricating oils include, but are not limited to, liquid esters of phosphorous containing acids, e.g., tricresyl phosphate, trioctyl phosphate, diethyl ester of decane phosphionic acid, etc., polymeric tetrahydrofurans and the like.

The lubricating oil may be derived from unrefined, refined and rerefined oils, either natural, synthetic or mixtures of two or more of any of these of the type disclosed hereinabove. Unrefined oils are those obtained directly from a natural or synthetic source (e.g., coal, shale, or tar sands bitumen) without further purification or treatment. Examples of unrefined oils include, but are not limited to, a shale oil obtained directly from retorting operations, a petroleum oil obtained directly from distillation or an ester oil obtained directly from an esterification process, each of which is then used without further treatment. Refined oils are similar to the unrefined oils except they have been further treated in one or more purification steps to improve one or more properties. These purification techniques are known to those of skill in the art and include, for example, solvent extractions, secondary distillation, acid or base extraction, filtration, percolation, hydrotreating, dewaxing, etc. Rerefined oils are obtained by treating used oils in processes similar to those used to obtain refined oils. Such rerefined oils are also known as reclaimed or reprocessed oils and often are additionally processed by techniques directed to removal of spent additives and oil breakdown products.

Lubricating oil base stocks derived from the hydroisomerization of wax may also be used, either alone or in combination with the aforesaid natural and/or synthetic base stocks. Such wax isomerate oil is produced by the hydroisomerization of natural or synthetic waxes or mixtures thereof over a hydroisomerization catalyst.

Natural waxes are typically the slack waxes recovered by the solvent dewaxing of mineral oils; synthetic waxes are typically the wax produced by the Fischer-Tropsch process.

Other useful fluids of lubricating viscosity include non-conventional or unconventional base stocks that have been processed, preferably catalytically, or synthesized to provide high performance lubrication characteristics.

### Lithium Compound

The lubricating oil composition of the present invention can contain a detergent. Metal-containing or ash-forming detergents function as both detergents to reduce or remove deposits and as acid neutralizers or rust inhibitors, thereby reducing wear and corrosion and extending engine life. Detergents generally comprise a polar head with a long hydrophobic tail. The polar head comprises a metal salt of an acidic organic compound. The salts may contain a substantially stoichiometric amount of the metal in which case they are usually described as normal or neutral salts. A large amount of a metal base may be incorporated by reacting excess metal compound (e.g., an oxide or hydroxide) with an acidic gas (e.g., carbon dioxide). Detergents that may be used include oil-soluble neutral and overbased sulfonates, phenates, sulfurized phenates, thiophosphonates, salicylates, and naphthenates and other oil-soluble carboxylates of potassium, lithium, or a combination thereof.

Commercial products are generally referred to as neutral or overbased. Overbased metal detergents are generally produced by carbonating a mixture of hydrocarbons, detergent acid, for example: sulfonic acid, carboxylate etc., metal oxide or hydroxides (for example potassium/lithium oxide or potassium/lithium hydroxide) and promoters such as xylene, methanol and water.

In one embodiment, the lithium detergent is a low overbased detergent, e.g., an overbased salt having a BN below 100. In one embodiment, the BN of a low overbased salt may be from about 5 to about 50. In another embodiment, the BN of a low overbased salt may be from about 10 to about 30. In yet another embodiment, the BN of a low overbased salt may be from about 15 to about 20.

In one embodiment, the lithium detergent is a medium overbased detergent, e.g., an overbased salt having a BN from about 100 to about 250. In one embodiment, the BN of a medium overbased salt may be from about 100 to about 200. In another embodiment, the BN of a medium overbased salt may be from about 125 to about 175.

In one embodiment, the lithium detergent is a high overbased detergent, e.g., an overbased salt having a BN above 250. In one embodiment, the BN of a high overbased salt may be from about 250 to about 550.

In one embodiment, the lithium detergent is a neutral detergent in that is does not include an overbasing step in its manufacture. In one embodiment, the lithium detergent is an overbased salt having a BN above 550.

In one embodiment, the detergent can be one or more lithium metal salts of an alkyl-substituted hydroxyaromatic carboxylic acid. Suitable hydroxyaromatic compounds include mononuclear monohydroxy and polyhydroxy aromatic hydrocarbons having 1 to 4, and preferably 1 to 3, hydroxyl groups. Suitable hydroxyaromatic compounds include phenol, catechol, resorcinol, hydroquinone, pyrogallol, cresol, and the like. The preferred hydroxyaromatic compound is phenol.

The alkyl substituted moiety of the lithium metal salts of an alkyl-substituted hydroxyaromatic carboxylic acid is derived from an alpha olefin having from about 10 to about 80 carbon atoms. The olefins employed may be linear, isomerized linear, branched or partially branched linear. The olefin may be a mixture of linear olefins, a mixture of isomerized linear olefins, a mixture of branched olefins, a mixture of partially branched linear or a mixture of any of the foregoing. In one embodiment, the mixture of linear olefins that may be used is a mixture of normal alpha olefins selected from olefins having from about 12 to about 30 carbon atoms per molecule. In one embodiment, the normal alpha olefins are isomerized using at least one of a solid or liquid catalyst.

In another embodiment, the olefins are a branched olefinic propylene oligomer or mixture thereof having from about 20 to about 80 carbon atoms, i.e., branched chain olefins derived from the polymerization of propylene. The olefins may also be substituted with other functional groups, such as hydroxy groups, carboxylic acid groups, heteroatoms, and the like. In one embodiment, the branched olefinic propylene oligomer or mixtures thereof have from about 20 to about 60 carbon atoms. In one embodiment, the branched olefinic propylene oligomer or mixtures thereof have from about 20 to about 40 carbon atoms.

In one embodiment, at least about 75 mole% (e.g., at least about 80 mole%, at least about 85 mole%, at least about 90 mole%, at least about 95 mole%, or at least about 99 mole%) of the alkyl groups contained within the lithium metal salt of an alkyl-substituted hydroxyaromatic carboxylic acid such as the alkyl groups of a lithium metal salt of an alkyl-substituted hydroxybenzoic acid detergent are a C₂₀ or higher. In another embodiment, the lithium metal salt of an alkyl-substituted hydroxyaromatic carboxylic acid is a lithium metal salt of an alkyl-substituted hydroxybenzoic acid that is derived from an alkyl-substituted hydroxybenzoic acid in which the alkyl groups are the residue of normal alpha-olefins containing at least 75 mole% C₂₀ or higher normal alpha-olefins.

In another embodiment, at least about 50 mole % (e.g., at least about 60 mole %, at least about 70 mole %, at least about 80 mole %, at least about 85 mole %, at least about 90 mole %, at least about 95 mole %, or at least about 99 mole %) of the alkyl groups contained within the lithium metal salt of an alkyl-substituted hydroxyaromatic carboxylic acid such as the alkyl groups of a lithium metal salt of an alkyl-substituted hydroxybenzoic acid are about C₁₄ to about C₁₈.

The resulting lithium metal salt of an alkyl-substituted hydroxyaromatic carboxylic acid will be a mixture of ortho and para isomers. In one embodiment, the product will contain about 1 to 99% ortho isomer and 99 to 1% para isomer. In another embodiment, the product will contain about 5 to 70% ortho and 95 to 30% para isomer.

The lithium metal salt of an alkyl-substituted hydroxyaromatic carboxylic acid can be neutral or overbased. Generally, an overbased lithium metal salt of an alkyl-substituted hydroxyaromatic carboxylic acid is one in which the BN of the lithium metal salt of an alkyl-substituted hydroxyaromatic carboxylic acid has been increased by a process such as the addition of a base source and an acidic overbasing compound (e.g., carbon dioxide).

Sulfonates may be prepared from sulfonic acids which are typically obtained by the sulfonation of alkyl substituted aromatic hydrocarbons such as those obtained from the fractionation of petroleum or by the alkylation of aromatic hydrocarbons. Examples included those obtained by alkylating benzene, toluene, xylene, naphthalene, diphenyl or their halogen derivatives. The alkylation may be carried out in the presence of a catalyst with alkylating agents having from about 3 to more than 70 carbon atoms. The alkaryl sulfonates usually contain from about 9 to about 80 or more carbon atoms, preferably from about 16 to about 60 carbon atoms per alkyl substituted aromatic moiety.

The oil soluble sulfonates or alkaryl sulfonic acids may be neutralized with oxides, hydroxides, alkoxides, carbonates, carboxylate, sulfides, hydrosulfides, nitrates, borates and ethers of the metal. The amount of metal compound is chosen having regard to the desired TBN of the final product but typically ranges from about 100 to about 220 wt. % (preferably at least about 125 wt. %) of that stoichiometrically required.

Lithium metal salt of phenols and sulfurized phenols are prepared by reaction with an appropriate metal compound such as an oxide or hydroxide and neutral or overbased products may be obtained by methods well known in the art. Sulfurized phenols may be prepared by reacting a phenol with sulfur or a sulfur containing compound such as hydrogen sulfide, sulfur monohalide or sulfur dihalide, to form products which are generally mixtures of compounds in which 2 or more phenols are bridged by sulfur containing bridges.

A further lithium containing compound can be one derived from a Mannich condensation product. In general, conventional oil-soluble Mannich condensation products are formed from the reaction of substituted phenols (i.e., polyisobutyl-substituted phenols) with formaldehyde and an amine or a polyamine. For example, U.S. Patent Nos. 7,964,543; 8,394,747; 8,455,681; 8,722,927 and 8,729,297, disclose a Mannich condensation product of a polyisobutyl-substituted hydroxyaromatic compound wherein the polyisobutyl group is derived from polyisobutene containing at least 50 weight percent methylvinylidene isomer and having a number average molecular weight in the range of about 400 to about 5000, an aldehyde, an amino acid or ester thereof, and an alkali metal base.

Generally, the amount of the lithium containing detergent can be from about 0.001 wt. % to about 25 wt. %, from about 0.05 wt. % to about 20 wt. %, or from about 0.1 wt. % to about 15 wt. %, or from about 0.5 wt. % to about 5 wt. %, from about, 1.0 wt. % to about 40 wt. %, based on the total weight of the lubricating oil composition.

A large number of these detergents are well known in the art and are commercially available. The lithium containing detergents may be prepared using the procedures described in for example, U.S. Pat. Nos. 6,235,688, 8,030,258, 8,188,020, 8,969,273, or by any procedure known to a person skilled in the art.

In an aspect, the present disclosure provides a lubricating engine oil composition for a direct injected, boosted, spark ignited internal combustion engine comprising at least one lithium-containing compound. In one embodiment, the amount of metal from the at least one lithium-containing compound is from about 100 to about 900 ppm, from about 100 to about 800 ppm, or from about 100 to about 700 ppm, or from about 100 ppm to about 600 ppm, or from about 100 to about 500 ppm, or from about 100 to about 400 ppm. In one embodiment, all of the metal in the lubricating oil composition is derived from the lithium compound.

In one embodiment, the lithium-containing compound can be combined with other conventional lubricating oil detergent additives such as magnesium and calcium salts of those detergent additives described herein. In one embodiment the calcium detergent(s) can be added in an amount sufficient to provide the lubricating oil composition from 0 to about 2400 ppm of calcium metal, from 0 to about 2200 ppm of calcium metal, from 100 to about 2000 ppm of calcium metal, from 200 to about 1800 ppm of calcium metal, or from about 100 to about 1800 ppm, or from about 200 to about 1500 ppm, or from about 300 to about 1400 ppm, or from about 400 to about 1400 ppm, of calcium metal in the lubricating oil composition. In one embodiment, the magnesium detergent(s) can be added in an amount sufficient to provide the lubricating oil composition from about 100 to about 1000 ppm of magnesium metal, or from about 100 to about 600 ppm, or from about 100 to about 500 ppm, or from about 200 to about 500 ppm of magnesium metal in the lubricating oil composition.

In one embodiment, the disclosure provides a lubricating engine oil composition comprising a lubricating oil base stock as a major component; and at least one lithium-containing compound, as a minor component; and wherein the engine exhibits greater than 50% reduced low speed pre-ignition, based on normalized low speed pre-ignition (LSPI) counts per 100,000 engine cycles, engine operation at between 500 and 3,000 revolutions per minute and brake mean effective pressure (BMEP) between 10 and 30 bar, as compared to low speed pre-ignition performance achieved in an engine using a lubricating oil that does not comprise the at least one lithium-containing compound.

In one aspect, the disclosure provides a lubricating engine oil composition for use in a downsized boosted engine comprising a lubricating oil base stock as a major component; and at least one lithium-containing compound, as a minor component; where the downsized engine ranges from about 0.5 to about 3.6 liters, from about 0.5 to about 3.0 liters, from about 0.8 to about 3.0 liters, from about 0.5 to about 2.0 liters, or from about 1.0 to about 2.0 liters. The engine can have two, three, four, five or six cylinders.

In an aspect, the present disclosure provides the, use of a at least one lithium-containing compound for preventing or reducing low speed pre-ignition in a direct injected, boosted, spark ignited internal combustion engine. In one embodiment, the amount of metal from the at least one lithium-containing compound is from about 100 to about 900 ppm, from about 100 to about 800 ppm, or from about 100 to about 700 ppm, or from about 100 ppm to about 600 ppm, or from about 100 to about 500 ppm, or from about 100 to about 400 ppm. In one embodiment, all of the metal in the lubricating oil composition is derived from the lithium compound. In yet another embodiment, all of the metal in the lubricating oil composition is derived from only the lithium compound.

In an aspect, the present disclosure provides the use of a at least one lithium-containing compound for preventing or reducing low speed pre-ignition in a direct injected, boosted, spark ignited internal combustion engine.

### Lubricating Oil Additives

In addition to the dispersant described herein, the lubricating oil composition can comprise additional lubricating oil additives.

The lubricating oil compositions of the present disclosure may also contain other conventional additives that can impart or improve any desirable property of the lubricating oil composition in which these additives are dispersed or dissolved. Any additive known to a person of ordinary skill in the art may be used in the lubricating oil compositions disclosed herein. Some suitable additives have been described in Mortier et al., "Chemistry and Technology of Lubricants", 2nd Edition, London, Springer, (1996); and Leslie R. Rudnick, "Lubricant Additives: Chemistry and Applications", New York, Marcel Dekker (2003). For example, the lubricating oil compositions can be blended with antioxidants, anti-wear agents, additional detergents such as metal detergents, rust inhibitors, dehazing agents, demulsifying agents, metal deactivating agents, friction modifiers, pour point depressants, antifoaming agents, co-solvents, corrosion-inhibitors, ashless dispersants, multifunctional agents, dyes, extreme pressure agents and the like and mixtures thereof. A variety of the additives are known and commercially available. These additives, or their analogous compounds, can be employed for the preparation of the lubricating oil compositions of the disclosure by the usual blending procedures.

For example, the lubricating oil composition of the present invention can contain one or more friction modifiers that can lower the friction between moving parts. Any friction modifier known by a person of ordinary skill in the art may be used in the lubricating oil composition. Non-limiting examples of suitable friction modifiers include fatty carboxylic acids; derivatives (e.g., alcohol, esters, borated esters, amides, metal salts and the like) of fatty carboxylic acid; mono-, di- or tri-alkyl substituted phosphoric acids or phosphonic acids; derivatives (e.g., esters, amides, metal salts and the like) of mono-, di- or tri-alkyl substituted phosphoric acids or phosphonic acids; mono-, di- or tri-alkyl substituted amines; mono- or di-alkyl substituted amides and combinations thereof. In some embodiments examples of friction modifiers include, but are not limited to, alkoxylated fatty amines; borated fatty epoxides; fatty phosphites, fatty epoxides, fatty amines, borated alkoxylated fatty amines, metal salts of fatty acids, fatty acid amides, glycerol esters, borated glycerol esters; and fatty imidazolines as disclosed in U.S. Patent No. 6,372,696, friction modifiers obtained from a reaction product of a C₄ to C₇₅, or a C₆ to C₂₄, or a C₆ to C₂₀, fatty acid ester and a nitrogen-containing compound selected from the group consisting of ammonia, and an alkanolamine and the like and mixtures thereof. The amount of the friction modifier may vary from about 0.01 wt. % to about 10 wt. %, from about 0.05 wt. % to about 5 wt. %, or from about 0.1 wt. % to about 3 wt. %, based on the total weight of the lubricating oil composition.

The lubricating oil composition of the present invention can contain one or more anti-wear agents that can reduce friction and excessive wear. Any anti-wear agent known by a person of ordinary skill in the art may be used in the lubricating oil composition. Non-limiting examples of suitable anti-wear agents include zinc dithiophosphate, metal (e.g., Pb, Sb, Mo and the like) salts of dithiophosphates, metal (e.g., Zn, Pb, Sb, Mo and the like) salts of dithiocarbamates, metal (e.g., Zn, Pb, Sb and the like) salts of fatty acids, boron compounds, phosphate esters, phosphite esters, amine salts of phosphoric acid esters or thiophosphoric acid esters, reaction products of dicyclopentadiene and thiophosphoric acids and combinations thereof. The amount of the anti-wear agent may vary from about 0.01 wt. % to about 5 wt. %, from about 0.05 wt. % to about 3 wt. %, or from about 0.1 wt. % to about 1 wt. %, based on the total weight of the lubricating oil composition.

In certain embodiments, the anti-wear agent is or comprises a dihydrocarbyl dithiophosphate metal salt, such as zinc dialkyl dithiophosphate compounds. The metal of the dihydrocarbyl dithiophosphate metal salt may be an alkali or alkaline earth metal, or aluminum, lead, tin, molybdenum, manganese, nickel or copper. In some embodiments, the metal is zinc. In other embodiments, the alkyl group of the dihydrocarbyl dithiophosphate metal salt has from about 3 to about 22 carbon atoms, from about 3 to about 18 carbon atoms, from about 3 to about 12 carbon atoms, or from about 3 to about 8 carbon atoms. In further embodiments, the alkyl group is linear or branched.

The amount of the dihydrocarbyl dithiophosphate metal salt including the zinc dialkyl dithiophosphate salts in the lubricating oil composition disclosed herein is measured by its phosphorus content. In some embodiments, the phosphorus content of the lubricating oil composition disclosed herein is from about 0.01 wt. % to about 0.14 wt., based on the total weight of the lubricating oil composition.

The lubricating oil composition of the invention contains a molybdenum-containing friction modifier. The molybdenum-containing friction modifier can be any one of the known molybdenum-containing friction modifiers or the known molybdenum-containing friction modifier compositions.

Preferred molybdenum-containing friction modifier is, for example, sulfurized oxymolybdenum dithiocarbamate, sulfurized oxymolybdenum dithiophosphate, amine-molybdenum complex compound, oxymolybdenum diethylate amide, and oxymolybdenum monoglyceride. Most preferred is a molybdenum dithiocarbamate friction modifier.

The lubricating oil composition of the invention generally contains the molybdenum-containing friction modifier in an amount of 0.01 to 0.15 wt. % in terms of the molybdenum content.

The lubricating oil composition of the invention preferably contains an organic oxidation inhibitor in an amount of 0.01-5 wt. %, preferably 0.1-3 wt. %. The oxidation inhibitor can be a hindered phenol oxidation inhibitor or a diarylamine oxidation inhibitor. The diarylamine oxidation inhibitor is advantageous in giving a base number originating from the nitrogen atoms. The hindered phenol oxidation inhibitor is advantageous in producing no NOx gas.

Examples of the hindered phenol oxidation inhibitors include 2,6-di-t-butyl-p-cresol, 4,4'-methylenebis(2,6-di-t-butylphenol), 4,4'-methylenebis(6-t-butyl-o-cresol), 4,4'-isopropylidenebis(2,6-di-t-butylphenol), 4,4'-bis(2,6-di-t-butylphenol), 2,2'-methylenebis(4-methyl-6-t-butylphenol), 4,4'-thiobis(2-methyl-6-t-butylphenol), 2,2-thio-diethylenebis[3-(3,5-di-t-butyl-4-hydroxyphenyl)propionate], octyl 3-(3,5-di-t-butyl-4-hydroxyphenyl)propionate, octadecyl 3-(3,5-di-t-butyl-4-hydroxyphenyl)propionate, and octyl 3-(3,54-butyl-4-hydroxy-3-methylphenyl)propionate.

Examples of the diarylamine oxidation inhibitors include alkyldiphenylamine having a mixture of alkyl groups of 4 to 9 carbon atoms, p,p'-dioctyldiphenylamine, phenyl-naphthylamine, phenyl-naphthylamine, alkylated-naphthylamine, and alkylated phenyl-naphthylamine.

Each of the hindered phenol oxidation inhibitor and diarylamine oxidation inhibitor can be employed alone or in combination. If desired, other oil soluble oxidation inhibitors can be employed in combination with the above-mentioned oxidation inhibitor(s).

The lubricating oil composition of the invention may further contain an oxymolybdenum complex of succinimide, particularly a sulfur-containing oxymolybdenum complex of succinimide. The sulfur-containing oxymolybdenum complex of succinimide can provide increased oxidation inhibition when it is employed in combination with the above-mentioned phenolic or amine oxidation inhibitors.

Lubricating oil compositions useful in the practice of the method of the present invention preferably contain from about 10 to about 1000 ppm, such as 30 to about 750 ppm, or 40 to about 500 ppm of molybdenum, or about 50 to about 400 ppm (measured as atoms of molybdenum). The inventors have shown that higher levels of calcium detergents (i.e., calcium sulfonates, salicylates, carboxylates, or phenates), that typically would cause multiple LSPI events, can be used by including from as little as about 200 ppm of potassium metal from a potassium containing compound to bring the number of LSPI events down to acceptable levels.

This synergism coupled with the use of higher levels of molybdenum in the formulation can further reduce the number of LSPI events. This allows the inventors to enjoy higher levels of calcium in the lubricating composition and the acid neutralization benefits that come with calcium detergents. Therefore, also disclosed is a synergistic combination of a potassium detergent, calcium detergent (i.e., at higher levels of Ca, e.g., 1400-2800), and a molybdenum containing additive.

In the preparation of lubricating oil formulations it is common practice to introduce the additives in the form of 10 to 80 wt. % active ingredient concentrates in hydrocarbon oil, e.g. mineral lubricating oil, or other suitable solvent.

Usually these concentrates may be diluted with 3 to 100, e.g., 5 to 40, parts by weight of lubricating oil per part by weight of the additive package in forming finished lubricants, e.g. crankcase motor oils. The purpose of concentrates, of course, is to make the handling of the various materials less difficult and awkward as well as to facilitate solution or dispersion in the final blend.

### Processes of Preparing Lubricating Oil Compositions

The lubricating oil compositions disclosed herein can be prepared by any method known to a person of ordinary skill in the art for making lubricating oils. In some embodiments, the base oil can be blended or mixed with the lithium compounds described herein. Optionally, one or more other additives in addition to the lithium compounds can be added. The lithium compounds and the optional additives may be added to the base oil individually or simultaneously. In some embodiments, the lithium compounds and the optional additives are added to the base oil individually in one or more additions and the additions may be in any order. In other embodiments, the lithium compounds and the additives are added to the base oil simultaneously, optionally in the form of an additive concentrate. In some embodiments, the solubilizing of the lithium compounds or any solid additives in the base oil may be assisted by heating the mixture to a temperature from about 25 °C to about 200 °C, from about 50 °C to about 150 °C or from about 75 °C to about 125 °C.

Any mixing or dispersing equipment known to a person of ordinary skill in the art may be used for blending, mixing or solubilizing the ingredients. The blending, mixing or solubilizing may be carried out with a blender, an agitator, a disperser, a mixer (e.g., planetary mixers and double planetary mixers), a homogenizer (e.g., Gaulin homogenizers and Rannie homogenizers), a mill (e.g., colloid mill, ball mill and sand mill) or any other mixing or dispersing equipment known in the art.

### Application of the Lubricating Oil Compositions

The lubricating oil composition disclosed herein may be suitable for use as motor oils (that is, engine oils or crankcase oils), in a spark-ignited internal combustion engine, particularly a direct injected, boosted, engine that is susceptible to low speed pre-ignition.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

### EXAMPLES

The following examples are intended for illustrative purposes only and do not limit in any way the scope of the present invention.

### Baseline Formulation

The base line formulation contained a Group 2 base oil, mixture of primary and secondary dialkyl zinc dithiophosphates in an amount to provide 770 ppm phosphorus to the lubricating oil composition, mixture of polyisobutenyl succinimide dispersants (borated and ethylene carbonate post-treated), a molybdenum succinimide complex in an amount to provide 180 ppm molybdenum to the lubricating oil composition, alkylated diphenylamine antioxidant, a borated friction modifier, foam inhibitor, a pour point depressant, and an olefin copolymer viscosity index improver. The lubricating oil compositions were blended into a 5W-30 or 10W-30 viscosity grade.

### Reference Example 1

A lubricating oil composition was prepared by adding 2280 ppm of potassium in the form of a potassium carboxylate (additive concentrate: TBN 84 mg KOH/g, C₂₀-C₂₈ hydrocarbyl group K content: 5.25 wt%) detergent to the formulation baseline.

### Reference Example 2

A lubricating oil composition was prepared by adding 1221 ppm of potassium in the form of a potassium carboxylate (additive concentrate: TBN 84 mg KOH/g, C₂₀-C₂₈ hydrocarbyl group K content: 5.25 wt%) detergent, and 1218 ppm of calcium in the form of a mixture of overbased calcium sulfonate (additive concentrate: TBN 425 mg KOH/g, C₂₀-C₂₄ hydrocarbyl group Ca content: 16.0 wt%) and overbased sulfurized calcium phenate (additive concentrate: TBN 250 mg KOH/g, Ca content: 9.6 wt%) detergents to the formulation baseline.

### Reference Example 3

A lubricating oil composition was prepared by adding 2184 ppm of potassium in the form of a potassium carboxylate (additive concentrate: TBN 84 mg KOH/g, C₂₀-C₂₈ hydrocarbyl group K content: 5.25 wt%) detergent to the formulation baseline.

### Reference Example 4

A lubricating oil composition was prepared by adding 1075 ppm of potassium in the form of a potassium carboxylate (additive concentrate: TBN 84 mg KOH/g, C₂₀-C₂₈ hydrocarbyl group K content: 5.25 wt%) detergent, and 1127 ppm of calcium in the form of an of overbased calcium sulfonate (additive concentrate: TBN 425 mg KOH/g, C₂₀-C₂₄ hydrocarbyl group Ca content: 16.0 wt%) detergent to the formulation baseline.

### Reference Example 5

A lubricating oil composition was prepared by adding 532 ppm of potassium in the form of a potassium carboxylate (additive concentrate: TBN 84 mg KOH/g, C₂₀-C₂₈ hydrocarbyl group K content: 5.25 wt%) detergent, and 1785 ppm of calcium in the form of a mixture of overbased calcium sulfonate (additive concentrate: TBN 425 mg KOH/g, C₂₀-C₂₄ hydrocarbyl group Ca content: 16.0 wt%) and overbased sulfurized calcium phenate (additive concentrate: TBN 250 mg KOH/g, Ca content: 9.6 wt%) detergents to the formulation baseline..

### Example 6

A lubricating oil composition was prepared by adding 404 ppm of lithium in the form of a lithium sulfonate (additive concentrate: TBN 500 mg KOH/g, C₂₀-C₂₈ hydrocarbyl group Li content: 6.5 wt%) detergent, and 6 ppm of calcium, likely as an impurity.

### Example 7

A lubricating oil composition was prepared by adding 216 ppm of lithium in the form of a lithium sulfonate (additive concentrate: TBN 500 mg KOH/g, C₂₀-C₂₈ hydrocarbyl group Li content: 6.5 wt%) detergent, and 1174 ppm of calcium in the form of a mixture of overbased calcium sulfonate (additive concentrate: TBN 425 mg KOH/g, C₂₀-C₂₄ hydrocarbyl group Ca content: 16.0 wt%) and overbased sulfurized calcium phenate (additive concentrate: TBN 250 mg KOH/g, Ca content: 9.6 wt%) detergents to the formulation baseline.

### Comparative Example 1

A lubricating oil composition was prepared by adding 2255 ppm of calcium in the form of a mixture of overbased calcium sulfonate (additive concentrate: TBN 425 mg KOH/g, C₂₀-C₂₄ hydrocarbyl group Ca content: 16.0 wt%) and overbased sulfurized calcium phenate (additive concentrate: TBN 250 mg KOH/g, Ca content: 9.6 wt%) detergents to the formulation baseline.

### Comparative Example 2

A lubricating oil composition was prepared by adding 2359 ppm of calcium in the form of an overbased calcium sulfonate (additive concentrate: TBN 425 mg KOH/g, C₂₀-C₂₄ hydrocarbyl group Ca content: 16.0 wt%).

### Comparative Example 3

A lubricating oil composition was prepared by adding 2342 ppm of calcium in the form of an overbased sulfurized calcium phenate (additive concentrate: TBN 250 mg KOH/g, Ca content: 9.6 wt%).

### Comparative Example 4

A lubricating oil composition was prepared by adding 2432 ppm of calcium in the form of an overbased calcium salicylate (additive concentrate: TBN 175 mg KOH/g, C₁₄-C₁₈ hydrocarbyl group, Ca content: 6.25 wt%).

### LSPI Testing

Low Speed Pre-ignition events were measured in two engines, a Ford 2.0L Ecoboost engine and a GM 2.0L Ecotec engine. Both of these engines are turbocharged gasoline direct injection (GDI) engines.

The Ford Ecoboost engine is operated in four-4 hour iterations. The engine is operated at 1750 rpm and 1.7 MPa break mean effective pressure (BMEP) with an oil sump temperature of 95 °C. The engine is run for 175,000 combustion cycles in each stage (first 170,000 valid engine cycles), and LSPI events are counted.

Additionally, LSPI testing was conducted on a 2.0 L, 4-cylinder TGDI GM Ecotec engine. A six segment test procedure was used to determine the number of LSPI events that occurred at two different specified engine load and speed conditions. Each segment of the test procedure comprised 25,000 engine cycles, where one cycle corresponds to 720 degrees of crank shaft rotation. The first set of conditions was 2000 RPM and 18 bar BMEP, hereafter referred to as "High Load". The second set of conditions was 1500 RPM and 16.5 bar BMEP, hereafter referred to as "Low Load". The test procedure comprised two segments of High Load, followed by two segments of Low Load, followed by two segments of High Load. A 20 minute warm up at 2000 RPM and 4 bar BMEP was also conducted prior to commencing the test procedure. This test procedure was repeated four times for each of the lubricants tested. LSPI events were counted during the High Load segments only, using pressure transducers placed in each of the 4 cylinders to monitor the peak cylinder pressure.

LSPI events are determined by monitoring peak cylinder pressure (PP) and mass fraction burn (MFB) of the fuel charge in the cylinder. When either or both criteria are met, it can be said that an LSPI event has occurred. The threshold for peak cylinder pressure varies by test, but is typically 4-5 standard deviations above the average cylinder pressure. Likewise, the MFB threshold is typically 4-5 standard deviations earlier than the average MFB (represented in crank angle degrees). LSPI events can be reported as average events per test, events per 100,000 combustion cycles, events per cycle, and/or combustion cycles per event. The results for each of these tests are shown in Tables 1 and 2 below.

**Table 1. Ford LSPI Test Results**

| | Ref Ex. 1 | Ref Ex. 2 | Ref Ex. 5 | Comp. Ex. 1 |
|---|---|---|---|---|
| K (ppm) | 2280 | 1221 | 532 | 0 |
| Ca (ppm) | 6 | 1218 | 1785 | 2255 |
| Average Cycles "Both"* | 1.25 | 0.5 | 4.5 | 19.25 |

| | | | | |
|---|---|---|---|---|
| *Counts all cycles of LSPI where both MFB02 and Peak Pressure Requirements are met | | | | |

**Table 2. GM LSPI Test Results**

| | Ref Ex.3 | Ref Ex. 4 | Comp.Ex. 2 | Comp. Ex. 3 | Comp. Ex. 4 |
|---|---|---|---|---|---|
| K (ppm) | 2184 | 1075 | 0 | 0 | 0 |
| Ca (ppm) | 7 | 1127 | 2359 | 2342 | 2432 |
| Average Cycles "Both"* | 2.56 | 2.56 | 16.75 | 18.13 | 24.00 |

| | | | | | |
|---|---|---|---|---|---|
| *Counts all cycles where both MFB02 and Peak Pressure requirements are met | | | | | |

**Table 3. Ford LSPI Test Results**

| | Ex. 6 | Ex. 7 | Comp. Ex. 1 |
|---|---|---|---|
| Li (ppm) | 404 | 216 | 0 |
| Ca (ppm) | 6 | 1174 | 2255 |
| Average Cycles "Both"* | 17.5 | 7.25 | 19.25 |
| Average Cycles "Both" with peak pressure >90 bar | 5.25 | 1.5 | 13.25 |
| Average Cycles "Both" with peak pressure >120 bar | 2 | 0.25 | 8.25 |

| | | | |
|---|---|---|---|
| *Counts all cycles of LSPI where both MFB02 and Peak Pressure Requirements are met The data shows that Applicant's reference examples comprising potassium provided significantly better LSPI performance than the comparative examples which did not contain potassium in both the Ford and GM engines. Furthermore, the use of potassium containing detergents allows for the use of higher levels of calcium containing detergents without drastically increasing LSPI events which implies there is a synergistic effect. | | | |

Further, the data in Table 3 show the inventive examples comprising lithium provided significantly better LSPI performance than the comparative example which did not contain lithium in the Ford engine. Specifically, the data show a reduction in LSPI events of about 60 to 88 % at peak pressures > 90 bar, and a reduction in LSPI events of about 73 to 96 % at peak pressures > 120 bar.

## Claims

1. A method for preventing or reducing low speed pre-ignition in a direct injected, boosted, spark ignited internal combustion engine, said method comprising the step of lubricating the crankcase of the engine with a lubricating oil composition comprising from 100 to 900 ppm of metal from at least one lithium-containing compound, based on the total weight of the lubricating oil.

2. The method of claim 1, wherein the engine is operated under a load with a break mean effective pressure (BMEP) of from 12 to 30 bars.

3. The method of claim 1, wherein the engine is operated at speeds between 500 and 3,000 rpm.

4. The method of claim 1, wherein the lithium-containing compound is a lithium-containing detergent.

5. The method of claim 4, wherein the detergent comprises one or more of a sulfonate detergent, a phenate detergent, a carboxylate detergent, a salicylate detergent, or combinations thereof.

6. The method of claim 1, wherein the lubricant composition further comprises at least one other additive selected from an ashless dispersant, an ashless antioxidant, a phosphorus- containing anti-wear additive, a friction modifier, and a polymeric viscosity modifier.

7. The method of any one of claims 1 to 6, wherein there is a reduction in the number of LSPI events of at least 50 percent, at least 60 percent, at least 70 percent, at least 80 percent, at least 90 percent, at least 95 percent, wherein LSPI events are measured in accordance with the LSPI Testing method described herein.

8. The method of any one of claims 1 to 6, wherein the low speed pre-ignition events are reduced to less than 10 LSPI events per 100,000 combustion events, for example, less than 5 LSPI events per 100,000 combustion events wherein LSPI events are measured in accordance with the LSPI Testing method described herein.

9. A lubricating engine oil composition for a direct injected, boosted, spark ignited internal combustion engine comprising from 100 to 900 ppm of metal from at least one lithium-containing compound, based on the total weight of the lubricating oil, and wherein the lubricating oil composition further comprises:
(a) calcium detergent(s) added in an amount sufficient to provide the lubricating oil composition from 100 to 2000 ppm of calcium metal; or
(b) magnesium detergent(s) added in an amount sufficient to provide the lubricating oil composition from 100 to 1000 ppm of magnesium metal.

10. A lubricating engine oil composition comprising a lubricating oil base stock as a major component; and at least one lithium-containing compound, as a minor component; and wherein the engine exhibits greater than 50% reduced low speed pre-ignition, based on normalized low speed pre-ignition (LSPI) counts per 100,000 engine cycles, engine operation at between 500 and 3,000 revolutions per minute and brake mean effective pressure (BMEP) between 10 and 30 bar, as compared to low speed pre-ignition performance achieved in an engine using a lubricating oil that does not comprise the at least one lithium-containing compound, wherein LSPI counts per 100,000 engine cycles are measured in accordance with the LSPI Testing method described herein, wherein the amount of metal from the lithium-containing compound is from about 300 to 3500 ppm, based on the total weight of the lubricating oil, and wherein the lubricating oil composition further comprises:
(a) calcium detergent(s) added in an amount sufficient to provide the lubricating oil composition from 100 to 2000 ppm of calcium metal; or
(b) magnesium detergent(s) added in an amount sufficient to provide the lubricating oil composition from 100 to 1000 ppm of magnesium metal.

11. Use of a at least one lithium-containing compound for preventing or reducing low speed pre-ignition in a direct injected, boosted, spark ignited internal combustion engine.

12. Use of claim 11, wherein the at least one lithium-containing compound is present in from 100 to 900 ppm of metal from the at least one lithium-containing compound, based on the total weight of the lubricating oil.

## Patentansprüche

1. Verfahren zum Verhindern oder Verringern von Frühzündung bei niedriger Drehzahl in einem direkteinspritzenden aufgeladenen Ottomotor, wobei das Verfahren den Schritt des Schmierens des Kurbelgehäuses des Motors mit einer Schmierölzusammensetzung umfasst, die 100 bis 900 ppm Metall aus mindestens einer lithiumhaltigen Verbindung, bezogen auf das Gesamtgewicht der Schmierölzusammensetzung, umfasst.

2. Verfahren nach Anspruch 1, wobei der Motor unter einer Last mit einem Bremsmitteldruck (Break Mean Effective Pressure, BMEP) von 12 bis 30 bar betrieben wird.

3. Verfahren nach Anspruch 1, wobei der Motor bei Drehzahlen zwischen 500 und 3000 Upm betrieben wird.

4. Verfahren nach Anspruch 1, wobei es sich bei der lithiumhaltigen Verbindung um ein lithiumhaltiges Detergens handelt.

5. Verfahren nach Anspruch 4, wobei das Detergens eines oder mehrere von einem Sulfonat-Detergens, einem Phenat-Detergens, einem Carboxylat-Detergens, einem Salicylat-Detergens oder Kombinationen davon umfasst.

6. Verfahren nach Anspruch 1, wobei die Schmiermittelzusammensetzung ferner mindestens ein weiteres Additiv umfasst, das aus einem aschefreien Dispergiermittel, einem aschefreien Antioxidans, einem phosphorhaltigen Verschleißschutzadditiv, einem Reibungsmodifikator und einem polymeren Viskositätsmodifikator ausgewählt ist.

7. Verfahren nach einem der Ansprüche 1 bis 6, wobei die Zahl von LSPI-Ereignissen um mindestens 50 Prozent, mindestens 60 Prozent, mindestens 70 Prozent, mindestens 80 Prozent, mindestens 90 Prozent, mindestens 95 Prozent verringert wird, wobei LSPI-Ereignisse gemäß dem hier beschriebenen LSPI-Testverfahren gemessen werden.

8. Verfahren nach einem der Ansprüche 1 bis 6, wobei die Ereignisse der Frühzündung bei niedriger Drehzahl auf weniger als 10 LSPI-Ereignisse pro 100.000 Verbrennungsereignisse, beispielsweise weniger als 5 LSPI-Ereignisse pro 100.000 Verbrennungsereignisse, verringert werden, wobei LSPI-Ereignisse gemäß dem hier beschriebenen LSPI-Testverfahren gemessen werden.

9. Motorschmierölzusammensetzung für einen direkteinspritzenden aufgeladenen Ottomotor, umfassend 100 bis 900 ppm Metall aus mindestens einer lithiumhaltigen Verbindung, bezogen auf das Gesamtgewicht der Schmierölzusammensetzung, und wobei die Schmierölzusammensetzung ferner Folgendes umfasst:
(a) ein oder mehrere Calcium-Detergentien, die in einer zur Bereitstellung von 100 bis 2000 ppm Calcium-Metall an die Schmierölzusammensetzung ausreichenden Menge zugesetzt sind, oder
(b) ein oder mehrere Magnesium-Detergentien, die in einer zur Bereitstellung von 100 bis 1000 ppm Magnesium-Metall an die Schmierölzusammensetzung ausreichenden Menge zugesetzt sind.

10. Motorschmierölzusammensetzung, umfassend einen Schmieröl-Grundstoff als Hauptkomponente und mindestens eine lithiumhaltige Verbindung als Nebenkomponente; und wobei der Motor um mehr als 50 % verringerte Frühzündung bei niedriger Drehzahl, bezogen auf normalisierte Zahlen von Frühzündungen bei niedriger Drehzahl (Low-Speed Pre-Ignition, LSPI) pro 100.000 Motorzyklen, Motorbetrieb bei zwischen 500 und 3000 Umdrehungen/min und einem Bremsmitteldruck (Break Mean Effective Pressure, BMEP) zwischen 10 und 30 bar, im Vergleich zu der Leistung bezüglich Frühzündung bei niedriger Drehzahl, die in einem Motor unter Verwendung eines Schmieröls, das die mindestens eine lithiumhaltige Verbindung nicht umfasst, erzielt wird, wobei LSPI-Zahlen pro 100.000 Motorzyklen gemäß dem hier beschriebenen LSPI-Testverfahren gemessen werden, wobei die Menge an Metall aus der lithiumhaltigen Verbindung etwa 300 bis 3500 ppm, bezogen auf das Gesamtgewicht des Schmieröls, umfasst und wobei die Schmierölzusammensetzung ferner Folgendes umfasst:
(a) ein oder mehrere Calcium-Detergentien, die in einer zur Bereitstellung von 100 bis 2000 ppm Calcium-Metall an die Schmierölzusammensetzung ausreichenden Menge zugesetzt sind, oder
(b) ein oder mehrere Magnesium-Detergentien, die in einer zur Bereitstellung von 100 bis 1000 ppm Magnesium-Metall an die Schmierölzusammensetzung ausreichenden Menge zugesetzt sind.

11. Verwendung mindestens einer lithiumhaltigen Verbindung zum Verhindern oder Verringern von Frühzündung bei niedriger Drehzahl in einem direkteinspritzenden aufgeladenen Ottomotor.

12. Verwendung nach Anspruch 11, wobei die mindestens eine lithiumhaltige Verbindung in einer Menge von 100 bis 900 ppm Metall aus der mindestens einen lithiumhaltigen Verbindung, bezogen auf das Gesamtgewicht des Schmieröls, vorliegt.

## Revendications

1. Procédé pour prévenir ou réduire le pré-allumage à basse vitesse dans un moteur à combustion interne à allumage par étincelle, à injection directe, suralimenté, ledit procédé comprenant l'étape de lubrification du carter du moteur avec une composition d'huile lubrifiante comprenant de 100 à 900 ppm de métal d'au moins un composé contenant du lithium, sur la base du poids total de l'huile lubrifiante.

2. Procédé selon la revendication 1, le moteur fonctionnant sous une charge avec une pression effective moyenne de frein (BMEP) de 12 à 30 bars.

3. Procédé selon la revendication 1, le moteur fonctionnant à des vitesses comprises entre 500 et 3000 tr/min.

4. Procédé selon la revendication 1, le composé contenant du lithium étant un détergent contenant du lithium.

5. Procédé selon la revendication 4, le détergent comprenant un ou plusieurs parmi un détergent sulfonate, un détergent phénate, un détergent carboxylate, un détergent salicylate, ou des combinaisons de ceux-ci.

6. Procédé selon la revendication 1, la composition lubrifiante comprenant en outre au moins un autre additif choisi parmi un dispersant sans cendres, un antioxydant sans cendres, un additif anti-usure contenant du phosphore, un modificateur de friction, et un modificateur de viscosité polymère.

7. Procédé selon l'une quelconque des revendications 1 à 6, une réduction du nombre d'événements LSPI se produisant, d'au moins 50 pour cent, d'au moins 60 pour cent, d'au moins 70 pour cent, d'au moins 80 pour cent, d'au moins 90 pour cent, d'au moins 95 pour cent, les événements LSPI étant mesurés conformément au procédé de test LSPI décrit ici.

8. Procédé selon l'une quelconque des revendications 1 à 6, les événements de pré-allumage à basse vitesse étant réduits à moins de 10 événements LSPI pour 100 000 événements de combustion, par exemple, moins de 5 événements LSPI pour 100 000 événements de combustion, les événements LSPI étant mesurés conformément au procédé de test LSPI décrit ici.

9. Composition d'huile moteur lubrifiante pour un moteur à combustion interne à allumage par étincelle, à injection directe, suralimenté, comprenant de 100 à 900 ppm de métal provenant d'au moins un composé contenant du lithium, sur la base du poids total de l'huile lubrifiante, et la composition d'huile lubrifiante comprenant en outre :
(a) un ou plusieurs détergents à base de calcium ajoutés en une quantité suffisante pour fournir à la composition d'huile lubrifiante de 100 à 2000 ppm de métal calcium ; ou
(b) un ou plusieurs détergents à base de magnésium ajoutés en une quantité suffisante pour fournir à la composition d'huile lubrifiante de 100 à 1000 ppm de métal magnésium.

10. Composition d'huile moteur lubrifiante comprenant une huile de base lubrifiante en tant que composant majeur ; et au moins un composé contenant du lithium, en tant que composant mineur ; et le moteur ayant un pré-allumage à basse vitesse réduit de plus de 50 %, sur la base des comptes de pré-allumage à basse vitesse normalisés (LSPI) par 100 000 cycles du moteur, d'un fonctionnement du moteur entre 500 et 3000 tours par minute et d'une pression effective moyenne de frein (BMEP) entre 10 et 30 bars, par rapport aux performances de pré-allumage à basse vitesse obtenues dans un moteur utilisant une huile lubrifiante qui ne comprend pas l'au moins un composé contenant du lithium, les comptes LSPI pour 100 000 cycles du moteur étant mesurés conformément au procédé de test LSPI décrit ici, la quantité de métal provenant du composé contenant du lithium étant d'environ 300 à 3500 ppm, sur la base du poids total de l'huile lubrifiante, et la composition d'huile lubrifiante comprenant en outre :
(a) un ou plusieurs détergents à base de calcium ajoutés en une quantité suffisante pour fournir à la composition d'huile lubrifiante de 100 à 2000 ppm de métal calcium ; ou
(b) un ou plusieurs détergents à base de magnésium ajoutés en une quantité suffisante pour fournir à la composition d'huile lubrifiante de 100 à 1000 ppm de métal magnésium.

11. Utilisation d'au moins un composé contenant du lithium pour prévenir ou réduire le pré-allumage à basse vitesse dans un moteur à combustion interne à allumage par étincelle, à injection directe, suralimenté.

12. Utilisation selon la revendication 11, l'au moins un composé contenant du lithium étant présent dans 100 à 900 ppm de métal de l'au moins un composé contenant du lithium, sur la base du poids total de l'huile lubrifiante.
